(19) Europäisches Patentamt European Patent Office Office européen des brevets

(11) **EP 3 450 210 B1**

(12) **EUROPEAN PATENT SPECIFICATION**

(45) Date of publication and mention
of the grant of the patent:
**07.10.2020 Bulletin 2020/41**

(51) Int Cl.:
**B60C 11/03** *(2006.01)*          **B60C 11/12** *(2006.01)*

(21) Application number: **18190393.1**

(22) Date of filing: **23.08.2018**

(54) **PNEUMATIC RADIAL TIRE**

RADIALLUFTREIFEN

PNEU RADIAL PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2017   JP 2017165937
18.07.2018   JP 2018135187**

(43) Date of publication of application:
**06.03.2019   Bulletin 2019/10**

(73) Proprietor: **SUMITOMO RUBBER INDUSTRIES,
LTD.
Kobe-shi,
Hyogo-ken 651-0072 (JP)**

(72) Inventors:
• **IKEDA, Ryota**
  **Kobe-shi, Hyogo 651-0072 (JP)**
• **NAKAYAMA, Hiroyuki**
  **Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 176 009          EP-A1- 3 254 872
JP-A- 2015 157 600**

## Description

### Technical Field

The present invention relates to a pneumatic radial tire for a passenger car, and in particular to a pneumatic radial tire which is useful for improving cornering performance of a four-wheeled vehicle while maintaining wet performance.

### Background Art

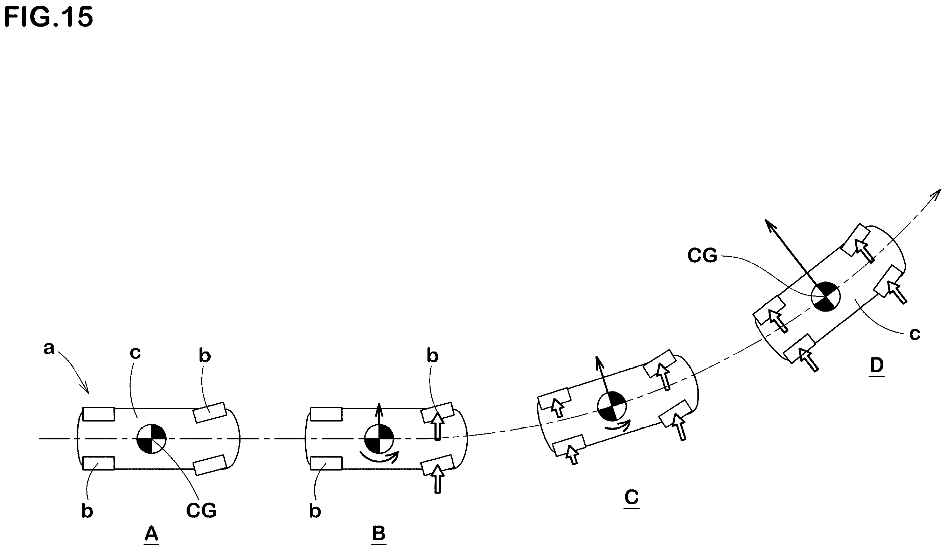

Fig. 15 shows a time-series change in cornering motions of a general four-wheeled automobile having a steering mechanism on front wheels thereof. First, as in a state (A), when the steering wheel is operated by the driver during running straight, a slip angle is given to tires (b) of the front wheels, therefore, cornering force is generated at the tires (b) of the front wheels (state (B)). Here, the "slip angle" is an angle between the running direction of the vehicle body (c) and each of the tires (b). Further, the "cornering force" is a component of force applied in a lateral direction with respect to the running direction of frictional force generated on a ground contacting surface of each of the tires (b) when a four-wheeled vehicle (a) turns, and particularly when the slip angle is 1 degree, the cornering force may be referred to as cornering power.

The cornering force generated at the tires (b) of the front wheels brings about a turning motion of the vehicle body (c) accompanied by yawing. This turning motion gives the slip angle to the tires (b) of the rear wheels, therefore, the cornering force is also generated at the tires (b) of the rear wheels (state (C)). Then, when a moment based on the cornering force of the tires (b) of the front wheels and the moment based on the cornering force of the tires (b) of the rear wheels are substantially balanced about a point of center of gravity CG of the vehicle (state (D)), the vehicle body (c) is in a steady state in which the vehicle body (c) moves obliquely at approximately zero yaw acceleration (hereinafter, such a running state may be referred to as a "revolution running state").

The inventors have recognized that it is important to shift the vehicle body to the revolution running state as soon as possible after cornering steering in order to improve the cornering performance of a four-wheeled vehicle, and then under the above recognition, the inventors conducted various kinds of research repeatedly on the tires.

Generally, the cornering power generated by a tire in a state in which the tire is mounted on a vehicle is called equivalent cornering power (hereinafter referred to as "equivalent CP"). This equivalent CP satisfies a relation of a following expression (2) with the cornering power of a tire alone measured by a bench test or the like (hereinafter referred to as "on-bench CP").

$$\text{Equivalent CP = On-bench CP x CP amplification}$$

$$\text{factor...(2)}$$

The equivalent CP is the cornering power including the influence of so-called roll steer, compliance steer, and the like and is the cornering power when assuming that rolling characteristics and suspension characteristics and the like of the vehicle are incorporated in the tire. These characteristics are represented by the CP amplification factor.

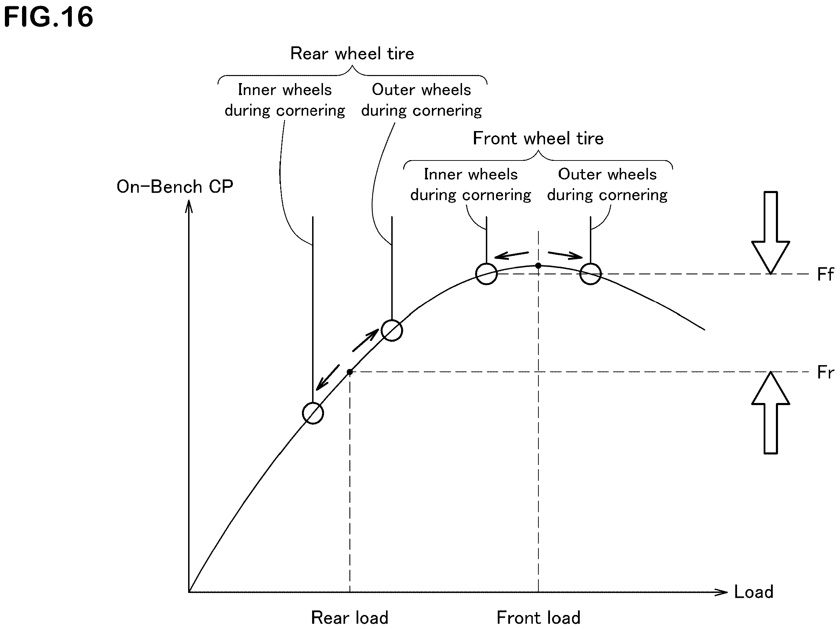

Fig. 16 is a graph showing relationship between the on-bench CP of a general pneumatic radial tire and a load applied thereto. Normally, it can be seen that the on-bench CP increases as the load increases, reaches the peak, and then gradually decreases after reaching the peak. Further, this graph also shows the approximate load range of the tire mounted on a four-wheeled vehicle of FF (front engine front drive) during cornering. First, in a four-wheeled vehicle of FF, a larger load tends to be applied to the front wheel tires than to the rear wheel tires. Further, in each pair of the front wheels and the rear wheels, a larger load tends to be applied to the tire located on an inner side of the cornering than the tire located on an outer side of the cornering. Therefore, between the tires on a side of the front wheels and the tires on a side of the rear wheels, there is a relatively large difference with respect to Ff and Fr which are average values of the on-bench CP generated at the time of cornering.

On the premise of the aforementioned load distribution on each of the tires, in order to improve the cornering performance by shifting to the revolution running state as soon as possible during the cornering motion of the vehicle, it is considered effective to relatively decrease the equivalent CP of the tires of the front wheels and to relatively increase the equivalent CP of the tires of the rear wheels on the other hand, that is, to make the equivalent CP of them closer, or to improve these so that they become close to each other at an early stage.

In order to relatively decrease the equivalent CP of the tires of the front wheels, the inventors focused on a self-aligning torque (hereinafter may be simply referred to as "SAT") which had not been focused so far.

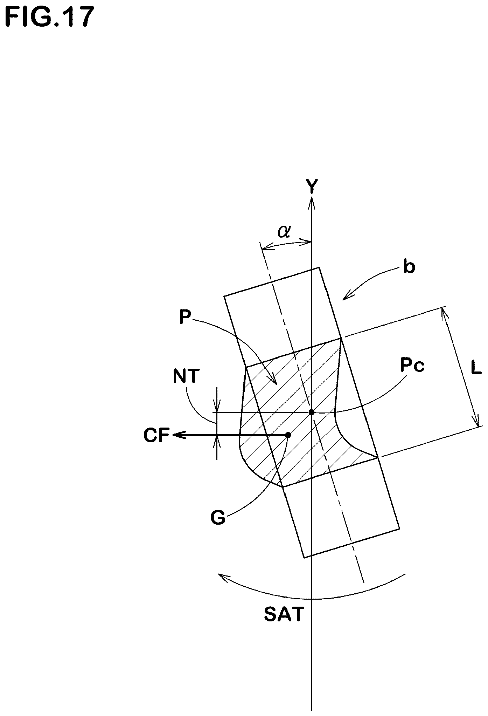

Here, SAT will be briefly described. Fig. 17 is an explanatory diagram showing a ground contacting surface of one of the tires (b) as viewed from the road surface during cornering at a slip angle $\alpha$ with respect to running direction (Y). As shown in Fig. 17, tread rubber of a ground contacting surface (P) is elastically deformed, therefore, lateral CF (cornering force) is generated. When a working point (G) of the CF (corresponding to a centroid of the hatched ground contacting surface) is located on a rear side of a ground contacting surface center (Pc) of the tire, the SAT which is a moment in a direction such that the slip angle $\alpha$ decreases is applied to the tire around its ground contacting surface center (PC). That is, the SAT acts in a direction to decrease the slip angle around the ground contacting surface center (Pc) of the tire. Note that a distance NT along the running direction (Y) between the ground contacting surface center (Pc) and the working point (G) of the CF is defined as a pneumatic trail.

Further, as a result of various experiments by the inventors, it has been found that the CP amplification factor of the above formula (2) is substantially proportional to the reciprocal of the SAT. Thereby, a tire with a large SAT results in relatively low equivalent CP.

On the other hand, the rear wheels have no steering mechanism, therefore, there is no influence of the SAT, thereby, as a tire, by increasing the on-bench CP itself, it is possible that its equivalent CP is increased.

As is clear from the above, in order to promptly shift a four-wheeled vehicle, in particular a four-wheeled vehicle of FF (front engine front drive) in which larger load is applied to the front wheels, to the revolution running state during cornering, the tires are required to have characteristics to generate large SAT.

The inventors made further research on the relationship between the SAT and the tread pattern of the tire and found that improving the grooves arranged in the shoulder land region and the middle land region is particularly effective in improving the SAT.

EP 3 176 009 A1 discloses a pneumatic radial tire comprising the features according to the preamble of claim 1. JP 2015 157 600 A discloses a pneumatic radial tire comprising features according to a related technology.

EP 3 254 872 A1 being published after the priority date of the present application also discloses a pneumatic radial tire comprising features according to a related technology.

## Summary of the Invention

The present invention was made in view of the above problems, and a primary object thereof is to provide a pneumatic radial tire useful for improving the cornering performance of a four-wheeled vehicle while maintaining the wet performance.

In one aspect of the present invention, a pneumatic radial tire for a passenger car includes a carcass having a radial structure, a belt layer arranged on an outer side of the carcass and formed of at least two belt plies, and a tread portion having a tread pattern whose position when mounted on a vehicle is specified, wherein the tread portion has an outer tread edge and an inner tread edge which are respectively positioned, when mounted on a vehicle, on an outer side and an inner side of the vehicle, the tread portion is divided into four circumferential land regions by a plurality of main grooves extending continuously in a tire circumferential direction, the circumferential land regions include an outer shoulder land region including the outer tread edge, an inner shoulder land region including the inner tread edge, an outer middle land region adjacent to the outer shoulder land region, and an inner middle land region adjacent to the inner shoulder land region, the outer shoulder land region is provided with a plurality of outer shoulder lateral grooves each extending inwardly in a tire axial direction from the outer tread edge and terminating within the outer shoulder land region, the inner shoulder land region is provided with a plurality of inner shoulder lateral grooves each extending axially inwardly from the inner tread edge and terminating within the inner shoulder land region, a number of the inner shoulder lateral grooves is larger than a number of the outer shoulder lateral grooves, and each of the outer middle land region and the inner middle land region is provided with a plurality of middle sipes each extending from an edge on a side of the inner tread edge of the respective land region toward the outer tread edge and terminating within the respective land region.

Furthermore, the middle sipes include first middle sipes and second middle sipes each having a smaller length in the tire axial direction than that of each of the first middle sipes.

In another aspect of the invention, it is preferred that the number of the inner shoulder lateral grooves is in a range of from 1.10 to 1.30 times the number of the outer shoulder lateral grooves.

In another aspect of the invention, it is preferred that the number of the outer shoulder lateral grooves is in a range of from 55 to 85.

In another aspect of the invention, it is preferred that each of the second middle sipes has a length in the tire axial direction in a range of from 0.65 to 0.85 times that of each of the first middle sipes.

In another aspect of the invention, it is preferred that each of the inner middle land region and the outer middle land region is provided with the first middle sipes and the second middle sipes arranged alternately in the tire circumferential direction.

In another aspect of the invention, it is preferred that a number of the middle sipes provided in the inner middle land region is larger than a number of the middle sipes provided in the outer middle land region.

In another aspect of the invention, it is preferred that the number of the middle sipes provided in the inner middle land region is in a range of from 1.10 to 1.30 times the number of the middle sipes provided in the outer middle land region.

In another aspect of the invention, it is preferred that the outer shoulder land region is provided with an outer shoulder narrow groove extending continuously in the tire circumferential direction between the outer shoulder main groove and the plurality of the outer shoulder lateral grooves.

In another aspect of the invention, it is preferred that the inner shoulder land region is provided with an inner shoulder narrow groove extending continuously in the tire circumferential direction between the inner shoulder main groove and the plurality of the inner shoulder lateral grooves.

In another aspect of the invention, it is preferred that a width (wa) in the tire axial direction of the outer shoulder land region is larger than a width (wb) in the tire axial direction of the inner shoulder land region.

In another aspect of the invention, it is preferred that the width (wa) of the outer shoulder land region is less than 1.20 times the width (wb) of the inner shoulder land region.

In another aspect of the invention, it is preferred that the first middle sipes and the second middle sipes are curved convexly in the same direction, and a radius of curvature of each of the first middle sipes is smaller than a radius of curvature of each of the second middle sipes.

In another aspect of the invention, it is preferred that the middle sipes include bent sipes each has at least one bent portion.

Brief Description of the Drawings

Fig. 1 is a lateral cross-sectional view of a pneumatic radial tire as an embodiment of the present invention.
Fig. 2 is a development view of a tread portion of the tire of Fig. 1.
Fig. 3 is an explanatory diagram showing SAT applied to front wheel tires when a vehicle is cornering to the left.
Fig. 4A is an explanatory diagram of a method of measuring rigidity of a land region.
Fig. 4B is an explanatory diagram of the method of measuring the rigidity of the land region.
Fig. 5 is an enlarged view of an inner shoulder land region of Fig. 2.
Fig. 6A is a cross-sectional view taken along B-B line of Fig. 5.
Fig. 6B is a cross-sectional view taken along C-C line of Fig. 5.
Fig. 7 is an enlarged view of an outer shoulder land region of Fig. 2.
Fig. 8 is an enlarged view of an outer middle land region and an inner middle land region.
Fig. 9A is a cross-sectional view taken along D-D line of Fig. 8.
Fig. 9B is a cross-sectional view taken along E-E line of Fig. 8.
Fig. 9C is a cross-sectional view taken along F-F line of Fig. 8.
Fig. 10 is an enlarged view of the outer middle land region and the inner middle land region of the tire according to another embodiment of the present invention.
Fig. 11 is a development view of the tread portion of the tire according to yet another embodiment of the present invention.
Fig. 12 is a development view of the tread portion of the tire according to yet another embodiment of the present invention.
Fig. 13 is a development view of the tread portion of the tire according to yet another embodiment of the present invention.
Fig. 14 is a development view of the tread portion of the tire as Reference.
Fig. 15 is an explanatory diagram showing cornering motions of a four-wheeled vehicle.
Fig. 16 is a graph showing relationship between on-bench CP of a general pneumatic radial tire and a load applied thereto.
Fig. 17 is an explanatory diagram showing a ground contacting surface of the tire of a front wheel of a vehicle during cornering.

Description of the Preferred Embodiment

An embodiment of the present invention will now be described in detail in conjunction with accompanying drawings.

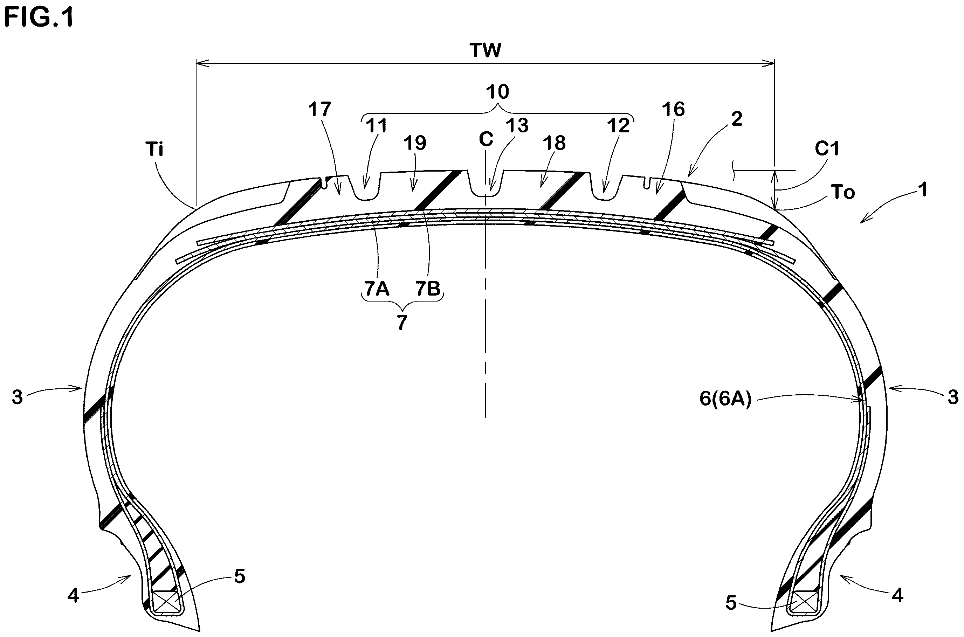

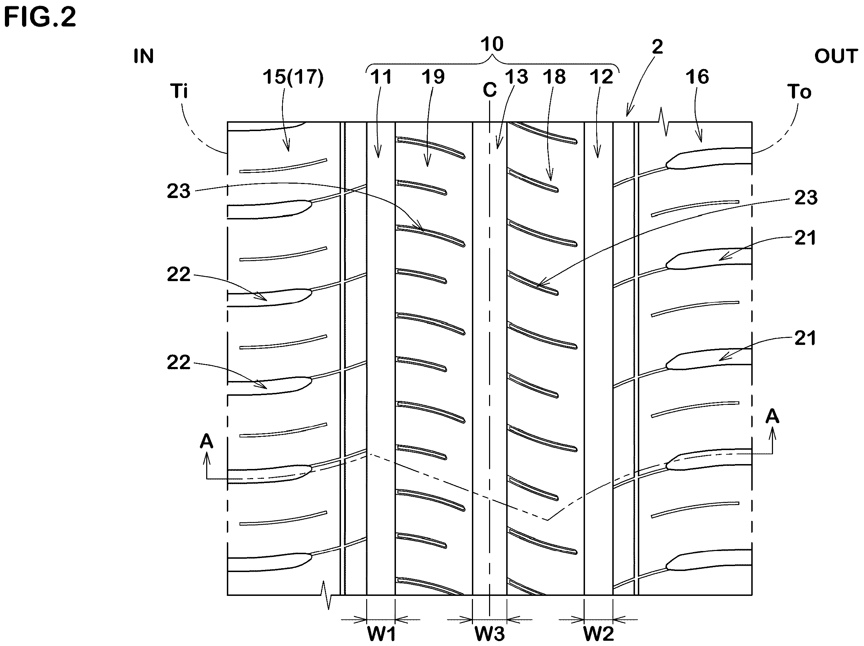

Fig. 1 is a lateral cross-sectional view of a pneumatic radial tire (hereinafter, may be simply referred to as "tire") 1 in this embodiment passing through a rotational axis thereof. Fig. 2 is a development view of a tread portion 2 of the tire 1 of Fig. 1. Fig. 1 corresponds to a cross-sectional view taken along A-A line of Fig. 2. The tire 1 in this embodiment is configured as a pneumatic radial tire for a passenger car. The tire 1 in this embodiment is suitable for a passenger car in which vertical load applied to the front wheels is larger than the vertical load applied to the rear wheels in a stationary state, and is particularly preferably used for a passenger car of FF.

As shown in Fig. 1, the tire 1 in this embodiment is provided with a carcass 6 having a radial structure and a belt layer 7.

The carcass 6 extends between bead cores 5 of bead portions 4 via the tread portion 2 and sidewall portions 3. The carcass 6 is formed of a single carcass ply 6A, for example. The carcass ply 6A is formed of carcass cords made of organic fibers arranged at angles each in a range of from 75 to 90 degrees with respect to a tire circumferential direction, for example.

The belt layer 7 is composed of at least two belt plies 7A and 7B. The belt plies 7A and 7B are formed of steel cords arranged at angles each in a range of from 10 to 45 degrees with respect to the tire circumferential direction, for example. The belt ply 7A is formed of the steel cords inclined in a direction opposite to the steel cords of the belt ply 7B adjacent thereto, for example. A reinforcing layer such as a band layer and the like may be further arranged on an outer side of the belt layer 7.

As shown in Fig. 2, a tread pattern whose position when mounted on a vehicle is specified is formed in the tread portion 2. The tread pattern of the tread portion 2 is formed in an asymmetric shape with respect to a tire equator (C). The mounting position of the tire 1 on a vehicle is indicated by a letter or a symbol on one of the sidewall portions 3 or the like, for example.

The tread portion 2 has an outer tread edge (To) and an inner tread edge (Ti). The outer tread edge (To) is located, when the tire is mounted on a vehicle, on the outer side (right side in Fig. 2) of the vehicle. The inner tread edge (Ti) is located, when the tire is mounted on a vehicle, on the inner side (left side in Fig. 2) of the vehicle.

The tread edges (To) and (Ti) are defined as outermost ground contacting positions in a tire axial direction when the tire 1 in a standard state is in contact with a flat surface with zero camber angles by being loaded with a standard tire load. The standard state is a state in which the tire is mounted on a standard rim, inflated to a standard inner pressure, and loaded with no tire load. In this specification, unless otherwise noted, dimensions and the like of various parts of the tire are values measured in the standard state. In the standard state, a distance in the tire axial direction between the outer tread edge (To) and the inner tread edge (Ti) is defined as a tread width TW.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread portion 2 in this embodiment is divided into four circumferential land regions 15 by three main grooves 10 extending continuously in the tire circumferential direction. The main grooves 10 include an inner shoulder main groove 11, an outer shoulder main groove 12, and a crown main groove 13.

The inner shoulder main groove 11 is provided closest to the inner tread edge (Ti) among the three main grooves 10, for example. The inner shoulder main groove 11 is provided on a side of the inner tread edge (Ti) of the tire equator (C).

The outer shoulder main groove 12 is provided closest to the outer tread edge (To) among the three main grooves 10, for example. The outer shoulder main groove 12 is provided on a side of the outer tread edge (To) of the tire equator (C).

The crown main groove 13 is provided between the inner shoulder main groove 11 and the outer shoulder main groove 12. It is preferred that the crown main groove 13 is provided on the tire equator (C), for example.

The main grooves 10 in this embodiment extend linearly along the tire circumferential direction, for example. In another embodiment, the main grooves 10 may extend in a wavy or zigzag manner, for example. Groove widths of the main grooves (a groove width W1 of the inner shoulder main groove 11, a groove width w2 of the outer shoulder main groove 12, and a groove width w3 of the crown main groove 13) can be arbitrarily determined according to the custom. In order to provide sufficient drainage performance while maintaining pattern rigidity of the tread portion 2, it is preferred that each of the groove widths W1, w2, and w3 is in about a range of from 2.5% to 5.0% of the tread width TW, for example. In a case of a radial tire for a passenger car, it is preferred that a groove depth of each of the main grooves 11 to 13 is in about a range of from 5 to 10mm, for example.

The tread portion 2 in this embodiment includes an outer shoulder land region 16, an inner shoulder land region 17, an outer middle land region 18, and an inner middle land region 19 as the circumferential land regions. The outer shoulder land region 16 includes the outer tread edge (To) and is defined as a region located on an outer side in the tire axial direction of the outer shoulder main groove 12. The inner shoulder land region 17 includes the inner tread edge (Ti) and is defined as a region located on an outer side in the tire axial direction of the inner shoulder main groove 11. The outer middle land region 18 is adjacent to the outer shoulder land region 16 and is defined as a region located between the outer shoulder main groove 12 and the crown main groove 13. The inner middle land region 19 is defined as a region located between the inner shoulder main groove 11 and the crown main groove 13.

The outer shoulder land region 16 is provided with a plurality of outer shoulder lateral grooves 21. Each of the outer shoulder lateral grooves 21 extends axially inwardly from the outer tread edge (To) and terminates within the outer shoulder land region 16.

The inner shoulder land region 17 is provided with a plurality of inner shoulder lateral grooves 22. Each of the inner shoulder lateral grooves 22 extends axially inwardly from the inner tread edge (Ti) and terminates within the inner shoulder land region 17.

One of the characteristics of the present invention is that a number N2 (a total number per tire circumference, the same applies hereinafter) of the inner shoulder lateral grooves 22 is configured to be larger than a number N1 of the outer shoulder lateral grooves 21.

Each of the outer middle land region 18 and the inner middle land region 19 is provided with a plurality of middle sipes 23. Each of the middle sipes 23 extends from an edge on a side of the inner tread edge (Ti) of the respective land region toward the outer tread edge (To) and terminates within the respective land region. One of the characteristics of the present invention is that each of the middle land regions 18 and 19 is provided with the middle sipes 23 described above. Note that, in this specification, the term "sipe" means a cut or a groove having a width of a main body part thereof not more than 0.8 mm. However, each of opening portions of the sipes on a ground contacting surface may be configured to have a larger width than the main body portion. However, a further detailed configuration of the middle sipes 23 in this embodiment will be described later.

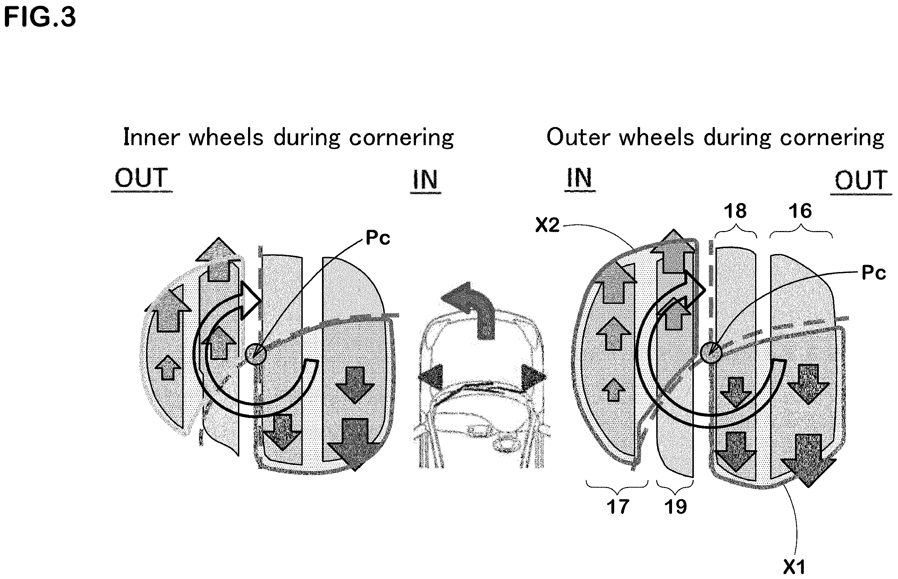

As described above, during cornering of a four-wheeled vehicle, it is effective to generate a large SAT in order to improve the cornering performance by shifting the vehicle to the revolution running state as soon as possible. The inventors made a detailed analysis on pressure distribution of the ground contacting surface of the tire during cornering, and then found that improving the grooves provided in the shoulder land regions 16 and 17 and the middle land regions 18 and 19 was particularly effective in increasing the SAT. Hereinafter, in this regard, as shown in Fig. 3, explanation will be made on a case where the vehicle is cornering to the left as an example.

In the front wheel tires having a slip angle with respect to the running direction, the circumferential land regions are deformed counterclockwise by the friction between the road surface and tread faces of the tires. When the slip angle becomes substantially constant, each of the deformed circumferential land regions try to return to their original state, therefore, they generate reaction force, that is, the SAT in the clockwise direction as indicated by arrows in the figure. In order to increase the SAT, i.e., the clockwise torque around the ground contacting surface center (Pc) of the tread portion, it is effective to generate large force in the driving direction in a rear region X1 of a ground contacting region of the outer shoulder land region 16 of the tire located on an outer side of the cornering (tire on the right side) which has a great contribution to the SAT. In order to generate such a force, it is important to increase the rigidity in the tire circumferential direction of the outer shoulder land region 16.

On the other hand, regarding the inner shoulder land region 17, in order to increase the SAT, it is effective to generate large force in a braking direction in a front region x2 of a ground contacting region of the inner shoulder land region 17 of the tire located on the outer side of the cornering (the tire on the right side) which has great contribution to the SAT. In order to generate such force in the braking direction, contrary to the outer shoulder land region 16, in the inner shoulder land region 17, it is effective to decrease the rigidity in the tire circumferential direction to improve a ground contacting property so as to flexibly follow the road surface.

Thereby, as in the present invention, the tire 1 in which the number N1 of the inner shoulder lateral grooves 22 is larger than the number N2 of the outer shoulder lateral grooves 21 can increase the rigidity in the tire circumferential direction of the outer shoulder land region 16 more than the rigidity in the tire circumferential direction of the inner shoulder land region 17 while maintaining the wet performance. Therefore, large SAT can be obtained.

As a result of various experiments, in order to generate larger SAT, the inventors found that relatively increasing the rigidity of a region on a side of the outer tread edge (To) of each of the middle land regions 18 and 19 increased the SAT by substantially the same mechanism as described above. The middle sipes 23 described above can relatively increase the rigidity of the region on the side of the outer tread edge (To) of each of the middle land regions 18 and 19 while maintaining the wet performance, therefore, it is possible that the SAT is further increased. Thereby, a four-wheeled vehicle with the pneumatic radial tires of the present invention mounted thereon promptly shifts to the revolution running state during cornering, therefore, it is possible that excellent cornering performance is provided.

Further, in the pneumatic radial tire, an outer diameter thereof gradually decreases axially outwardly in the shoulder land regions 16 and 17. Thereby, in the tire located on the outer side of the cornering of the front wheels, the outer shoulder land region 16 generates camber thrust which is force in the opposite direction to the cornering force of the tire. The inner shoulder land region 17 generates the camber thrust in the same direction as the cornering force of the tire. Thereby, it is preferred that the outer shoulder land region 16 is configured to be larger than the inner shoulder land region 17 in the rigidity in the tire axial direction. Therefore, the outer shoulder land region 16 generates the camber thrust larger than that of the inner shoulder land region 17. Thereby, the camber thrust generated by the outer shoulder land region 16 is helpful for decreasing the cornering force of the front wheel tires, therefore, it is possible that the vehicle is shifted to the revolution running state more quickly during cornering.

In a preferred embodiment, in order to prevent occurrence of uneven wear while generating larger SAT, with respect to the rigidity in the tire circumferential direction, it is preferred that the outer shoulder land region 16 has a rigidity ratio σ1 in a range of from 1.05 to 1.40 times that of the inner shoulder land region 17. Similarly, with respect to the rigidity in the tire axial direction, it is preferred that the outer shoulder land region 16 has a rigidity ratio σ2 in a range of from 1.05 to 1.40 times that of the inner shoulder land region 17.

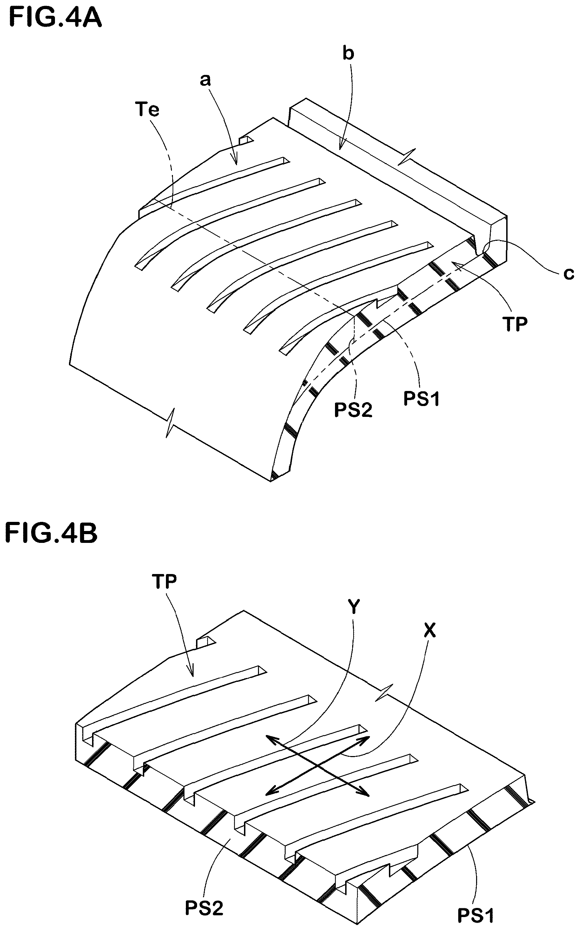

The rigidity in the tire circumferential direction and the rigidity in the tire axial direction of each of the land regions 16 and 17 are indicated by the force required to generate a unit deformation amount in respective direction. Specific measurement methods include the following. Fig. 4A is a land region (a) provided with lateral grooves as an example of a land region. As shown in Fig. 4A, the land region (a), which is a measuring object, having a length not less than 2 pitches in the tire circumferential direction is cut out from the tire 1. At this time, a land region test piece TP is cut out by a surface PS1 passing through a groove bottom (c) of a main groove (b) and extending in parallel with the ground contacting surface of the tread portion, and a surface PS2 passing through the tread edge (Te) and extending along a tire radial direction (shown in Fig. 4B). Next, a ground contacting surface of the land region test piece TP is pressed against a flat test surface with the standard tire load to maintain the ground contacting state, for example. Next, the test surface is moved with force (F) in the tire circumferential direction (Y) or the tire axial direction (x), and then the displacement of the land region in the direction (Y) or (x) is measured. Then, the land region rigidity in each of the directions (Y) and (x) is obtained by dividing the force (F) by the amount of displacement in respective direction of the land region test piece TP.

In a preferred embodiment, in a bench test, for example (in a test by using a flat belt type tire testing machine, for example), it is preferred that the tire 1 satisfies the following expression (1) under the following running conditions.

Tire rim: standard rim
Tire inner pressure: standard inner pressure
Tire load: 70% of standard tire load
Speed: 10 km/h
Slip angle: 0.7 degrees
Camber angle: -1.0 degrees

$$SAT \geq 0.18 \times L \times CF \ldots (1)$$

Here, "SAT" is the self-aligning torque (N-m), "L" is a ground contacting maximum length (m) in the tire circumferential direction of the tread portion, and "CF" is the cornering force (N). Further, "minus" of the camber angle means that the upper portion of the tire leans toward the center of the vehicle.

The measurement conditions shown above are based on conditions of the front wheels during cornering (lateral acceleration: approximately 0.2 G) which tend to occur frequently in a four-wheeled vehicle. The inventors mounted various sensors on a four-wheeled vehicle and measured the above-mentioned conditions of the tire during cornering (load, camber angle, slip angle, and angle), and approximated these in the bench test to obtain the above running conditions. Thereby, the tire 1 which satisfies the above expression (1) can reliably and sufficiently generate the SAT in a normal cornering state. That is, it is possible that the vehicle is shifted to the revolution running state more quickly during cornering.

Hereinafter, a specific configuration of the present embodiment that can further exert the above-described effects will be described.

[Configuration of Inner Shoulder Land Region]

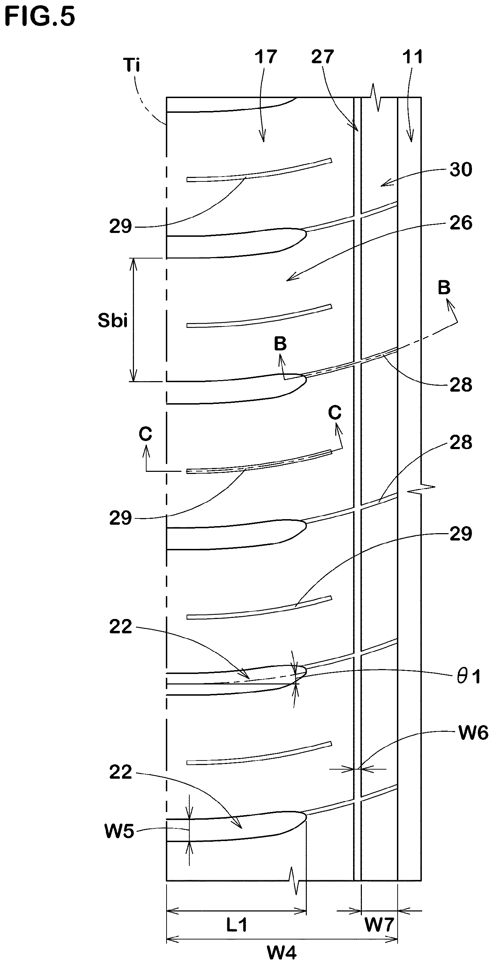

Fig. 5 is an enlarged view of the inner shoulder land region 17. As shown in Fig. 5, the inner shoulder land region 17 has a width w4 in the tire axial direction in a range of from 0.25 to 0.35 times the tread width TW, for example.

It is preferred that each of the inner shoulder lateral grooves 22 is arranged at an angle θ1 in the range of from zero to 20 degrees with respect to the tire axial direction, for example. It is preferred that the angle θ1 of each of the inner shoulder lateral grooves 22 in this embodiment gradually increases axially inwardly, for example.

It is preferred that a length L1 in the tire axial direction of each of the inner shoulder lateral grooves 22 is in the range of from 0.55 to 0.70 times the width w4 in the tire axial direction of the inner shoulder land region 17, for example. It is preferred that a groove width w5 of each of the inner shoulder lateral grooves 22 is in the range of 0.4% to 0.8% of the tread width TW, for example. It is preferred that a groove depth of each of the inner shoulder lateral grooves 22 is in the range of from 0.50 to 0.60 times a groove depth of the inner shoulder main groove 11, for example. In the case where the inner shoulder lateral grooves 22 are configured as described above, the rigidity in the tire circumferential direction and the rigidity in the tire axial direction of the inner shoulder land region 17 are decreased to a more preferred range, therefore, it is possible that excellent wet performance and the cornering performance are obtained.

In order to improve the wet performance and the cornering performance in a good balance, the number N2 of the inner shoulder lateral grooves 22 is preferably not less than 1.10, more preferably not less than 1.15 times, and preferably not more than 1.30 times, more preferably not more than 1.25 times the number N1 of the outer shoulder lateral grooves 21.

The inner shoulder land region 17 includes inner shoulder block pieces 26 each defined between a pair of the inner shoulder lateral grooves 22 adjacent to each other in the tire circumferential direction. Each of the inner shoulder block pieces 26 has a tire circumferential direction length (Sbi). It is preferred that the tire circumferential direction length (Sbi) of each of the inner shoulder block pieces 26 in this embodiment is in the range of from 0.9% to 1.2% of one tire circumferential length of the inner shoulder land region 17, for example.

The inner shoulder land region 17 in this embodiment is further provided with an inner shoulder narrow groove 27, inner connecting sipes 28, and inner shoulder sipes 29. Each of the inner shoulder sipes 29 does not include an opening having an enlarged width, for example, and it is preferred that each of the inner shoulder sipes 29 has the width not more than 0.8 mm in its entirety.

The inner shoulder narrow groove 27 extends continuously in the tire circumferential direction between the inner shoulder lateral grooves 22 and the inner shoulder main groove 11, for example. The inner shoulder narrow groove 27 in this embodiment extends linearly along the tire circumferential direction, for example. However, the present invention is not limited to such an embodiment, and the inner shoulder narrow groove 27 may extend in a zigzag manner, for example. The inner shoulder narrow groove 27 configured as such improves the wet performance and moderates the rigidity of the inner shoulder land region 17, therefore, it is possible that the SAT is eventually increased.

It is preferred that a groove width w6 of the inner shoulder narrow groove 27 is in the range of from 1.0% to 2.0%, for example. A groove depth of the inner shoulder narrow groove 27 is preferably in the range of from 0.40 to 0.60 times, more preferably in the range of from 0.47 to 0.52 times the groove depth of the inner shoulder main groove 11, for example.

An inner narrow rib portion 30 is formed between the inner shoulder narrow groove 27 and the inner shoulder main groove 11. The inner narrow rib portion 30 in this embodiment is provided with only the sipes and with no lateral grooves for drainage. It is preferred that a width w7 in the tire axial direction of the inner narrow rib portion 30 is in the range of from 0.10 to 0.20 times the width w4 of the inner shoulder land region 17, for example.

Each of the inner connecting sipes 28 extends between an inner end of respective one of the inner shoulder lateral grooves 22 and the inner shoulder main groove 11 so as to cross the inner shoulder narrow groove 27, for example. The inner connecting sipes 28 configured as such can increase the frictional force by edges thereof during running on a wet road surface.

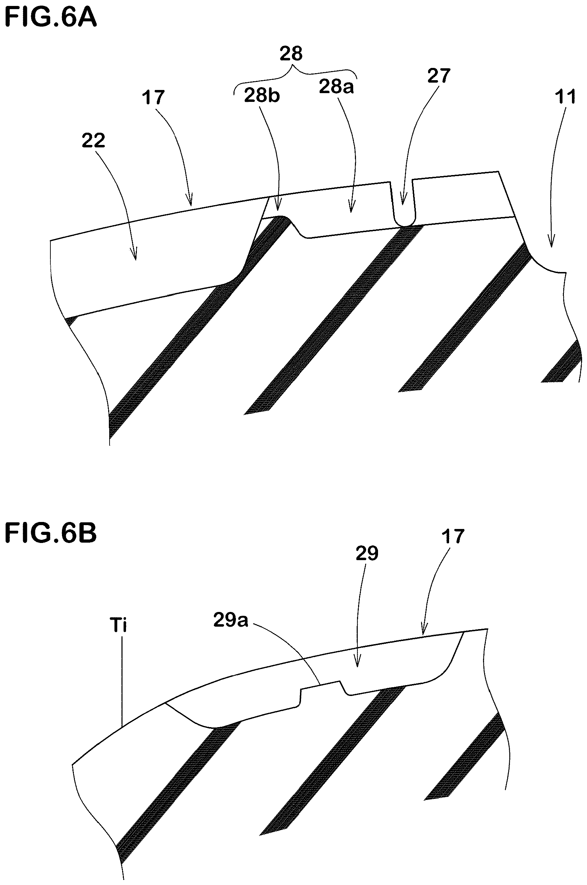

Fig. 6A is a cross-sectional view of one of the inner connecting sipes 28 taken along B-B line of Fig. 5 along the length direction thereof. As shown in Fig. 6A, each of the inner connecting sipes 28 includes a first portion (28a) arranged on a side of the inner shoulder main groove 11, and a second portion (28b) formed by raising the bottom surface thereof on a side of the inner tread edge (Ti) of the first portion (28a). Thereby, excessive decrease in the rigidity of the inner shoulder land region 17 is suppressed.

As shown in Fig. 5, each of the inner shoulder sipes 29 is provided between a pair of the inner shoulder lateral grooves 22 adjacent to each other in the tire circumferential direction, for example. The inner shoulder sipes 29 extend substantially parallel to the inner shoulder lateral grooves 22, for example. Both ends of each of the inner shoulder sipes 29 in this embodiment terminate within the inner shoulder land region 17, for example. The inner shoulder sipes 29 configured as such improve the wet performance and moderate the rigidity in the tire circumferential direction of the inner shoulder land region 17 moderately, therefore, it is helpful for eventually increasing the SAT.

Fig. 6B is a cross-sectional view of one of the inner shoulder sipes 29 taken along C-C line of Fig. 5 along the length direction thereof. As shown in Fig. 6B, each of the inner shoulder sipes 29 has a raised portion (29a) formed by partially raising the bottom surface thereof, for example. The raised portions (29a) configured as such suppresses the inner shoulder sipes 29 from opening, therefore, it is possible that edge effects thereof are improved.

As shown in Fig. 5, it is preferred that the inner shoulder land region 17 has a land ratio in the range of from 75% to 85%, for example. In this specification, the "land ratio" is defined as a ratio Sb/Sa of a total ground contacting area (Sb) of the actual land region to a total area (Sa) of a virtual ground contacting surface obtained by filling all the grooves provided in the target land region.

[Configuration of Outer Shoulder Land Region]

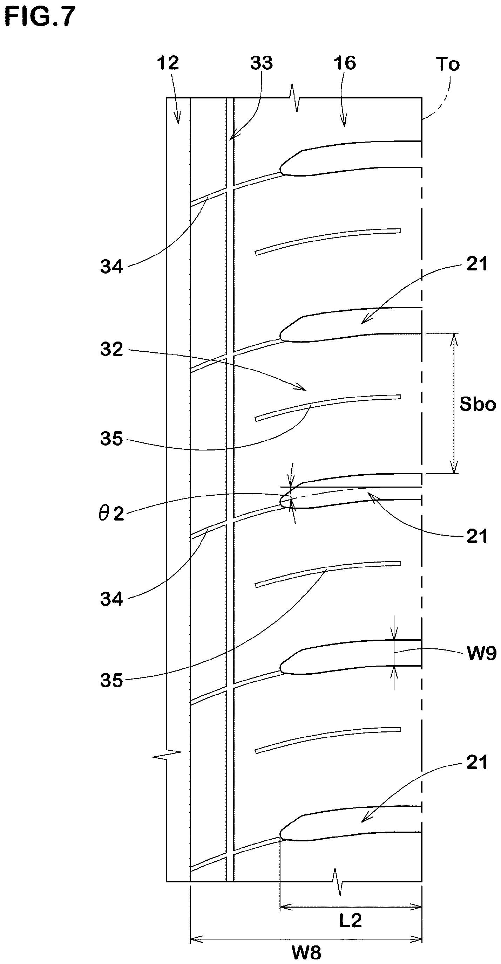

Fig. 7 is an enlarged view of the outer shoulder land region 16. As shown in Fig. 7, outer shoulder land region 16 has a width w8 in the tire axial direction in the range of from 0.25 to 0.35 times the tread width TW, for example. As a preferred embodiment, the outer shoulder land region 16 in this embodiment is configured to have the same width as the inner shoulder land region 17 (shown in Fig. 5).

It is preferred that each of the outer shoulder lateral grooves 21 is arranged at an angle θ2 in the range of from 0 to 20 degrees with respect to the tire axial direction, for example. It is preferred that the angle θ2 gradually increases axially inwardly, for example.

It is preferred that a length L2 in the tire axial direction of each of the outer shoulder lateral grooves 21 is in the range of from 0.55 to 0.70 times the width w8 in the tire axial direction of the outer shoulder land region 16, for example. It is preferred that a groove width w9 of each of the outer shoulder lateral grooves 21 is in the range of from 0.4% to 0.8% of the tread width TW, for example. It is preferred that a groove depth of each of the outer shoulder lateral grooves 21 is in the range of from 0.50 to 0.60 times the groove depth of the outer shoulder main groove 12, for example.

In order to increase the SAT while maintain the wet performance, the number N1 of the outer shoulder lateral grooves 21 is preferably in the range of from 55 to 85, more preferably in the range of from 60 to 70.

The outer shoulder land region 16 includes outer shoulder block pieces 32 each defined between a pair of the inner shoulder lateral grooves 22 adjacent to each other in the tire circumferential direction. Each of the outer shoulder block pieces 32 has a tire circumferential direction length (Sbo). In a preferred embodiment, a ratio Sbi/Sbo of the tire circumferential direction lengths of one of the inner shoulder block pieces 26 and one of the outer shoulder block pieces 32 is set to be in the range of from 0.85 to 0.95, for example. Thereby, high SAT is obtained, therefore, excellent cornering performance is eventually obtained.

The outer shoulder land region 16 in this embodiment is further provided with an outer shoulder narrow groove 33, outer connecting sipes 34, and outer shoulder sipes 35. In a preferred embodiment, the outer shoulder narrow groove 33, the outer connecting sipes 34, and the outer shoulder sipes 35 have configurations similar to those of the inner shoulder narrow groove 27, the inner connecting sipes 28, and the inner shoulder sipes 29 described above, respectively.

In order to further increase the SAT, it is preferred that the outer shoulder land region 16 has a larger land ratio than that of the inner shoulder land region 17, for example. It is preferred that the land ratio of the outer shoulder land region 16 is in the range of from 1.05 to 1.10 times the land ratio of the inner shoulder land region 17, for example.

[Configuration of Inner Middle Land Region and Outer Middle Land Region]

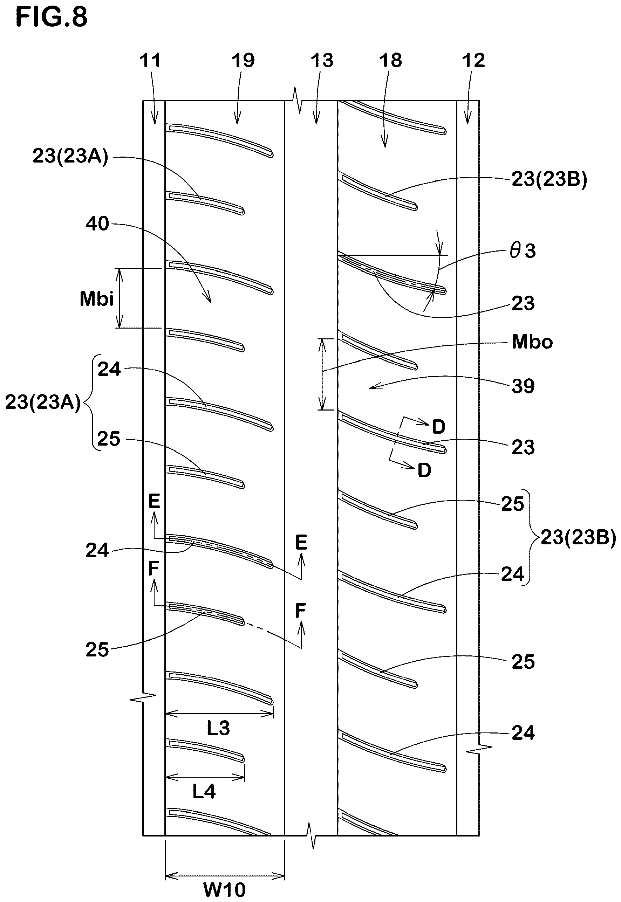

Fig. 8 is an enlarged view of the outer middle land region 18 and the inner middle land region 19. As shown in Fig. 8, each of the middle land regions 18 and 19 has a width W10 in the tire axial direction in the range of from 0.10 to 0.20 times the tread width Tw, for example. The outer middle land region 18 and the inner middle land region 19 in this embodiment have the same width.

As described above, each of the middle land regions 18 and 19 is provided with the middle sipes 23. Note that, in this specification, the middle sipes 23 provided in the inner middle land region 19 may be referred to as inner middle sipes 23A, and the middle sipes 23 provided in the outer middle land region 18 may be referred to as outer middle sipes 23B.

It is preferred that each of the middle sipes 23 terminates on a side of the outer tread edge (To) of a center position in a width direction of respective one of the middle land regions 18 and 19, for example. Thereby, lengths of the middle sipes 23 are secured, therefore, it is possible that the wet performance is effectively maintained.

According to the invention, the middle sipes 23 include first middle sipes 24 and second middle sipes 25 each having a smaller length in the tire axial direction than that of each of the first middle sipes 24.

It is preferred that a length L3 in the tire axial direction of each of the first middle sipes 24 in this embodiment is in the range of from 0.85 to 0.95 times the width W10 in the tire axial direction of the middle land region, for example. A length L4 in the tire axial direction of each of the second middle sipes 25 is preferably in the range of from 0.65 to 0.85 times, more preferably in the range of from 0.75 to 0.80 times the length L3 of each of the first middle sipes 24. The first middle sipes 24 and the second middle sipes 25 configured as such can improve the wet performance and the cornering performance in a good balance.

In each of the middle land regions 18 and 19, it is preferred that the first middle sipes 24 and the second middle sipes 25 are arranged alternately in the tire circumferential direction.

It is preferred that each of the middle sipes 23 is arranged at an angle θ3 in the range of from of 0 to 20 degrees with respect to the tire axial direction, for example. In a further preferred embodiment, the angle θ3 of each of the middle sipes 23 gradually decreases toward the outer tread edge (To), for example.

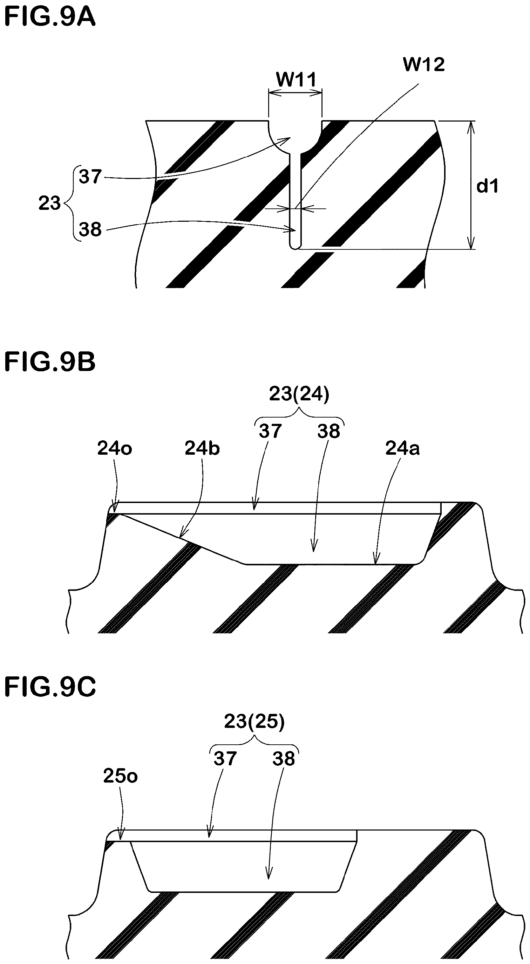

Fig. 9A is a cross-sectional view taken along D-D line orthogonal to a longitudinal direction of one of the middle sipes 23 of Fig. 8. As shown in Fig. 9A, each of the middle sipes 23 includes an opening portion 37 having an opening on a side of the ground contacting surface and a main body portion 38 provided on an inner side of the opening portion 37 in the tire radial direction, for example. It is preferred that a width w11 of each of the opening portions 37 on the ground contacting surface is in the range of from 1.0 to 2.5 mm, for example. Each of the main body portions 38 has a width W12 not more than 0.8 mm, for example. The middle sipes 23 configured as such can improve the wet performance while suppressing excessive decrease in the rigidity of the middle land regions 18 and 19.

From the similar point of view, it is preferred that a depth (d1) of each of the middle sipes 23 is in the range of from 0.50 to 0.60 times the groove depth of the crown main groove 13.

Fig. 9B is a cross-sectional view taken along E-E line along the longitudinal direction of one of the first middle sipes 24 of Fig. 8. As shown in Fig. 9B, each of the first middle sipes 24 includes a first portion (24a) having a substantially constant depth and a second portion (24b) having a depth gradually decreasing from the first portion (24a) toward the inner tread edge (Ti). Further, it is preferred that, in each of the first middle sipes, the boundary between the first portion (24a) and the second portion (24b) is located closer to the inner tread edge (Ti) than the center position in the width direction of the middle land region. The first middle sipes 24 configured as such are suppressed from excessively opening during running on a wet road surface, therefore, it is possible that high frictional force is provided by edges thereof.

As a particularly preferred embodiment, an outer end (24o) of each of the first middle sipes 24 is formed with only the opening portion 37. That is, it is preferred that the main body portion 38 of each of the first middle sipes 24 terminates before reaching one of the main grooves without being connected with the main groove while the depth thereof gradually decreasing toward the inner tread edge (Ti). The first middle sipes 24 configured as such maintain the rigidity of the middle land regions, therefore, it is possible that the uneven wear thereof is suppressed.

Fig. 9C is a cross-sectional view taken along F-F line along the longitudinal direction of one of the second middle sipes 25 of Fig. 8. As shown in Fig. 9C, each of the second middle sipes 25 has a bottom surface extending in the tire axial direction at a substantially constant depth.

As a particularly preferred embodiment, an outer end (25o) of each of the second middle sipes 25 is formed with only the opening portion 37. That is, it is preferred that the main body portion 38 of each of the second middle sipes 25 terminates before reaching one of the main grooves without being connected with the main groove. Thereby, the rigidity of the land regions in the vicinity of the outer ends (25o) of the second middle sipes 25 is maintained, therefore, it is possible that the uneven wear of the middle land regions in the parts thereof on the side of the inner tread edge (Ti) is consequently suppressed.

As shown in Fig. 8, it is preferred that number N3 of the outer middle sipes 23B is in the range of from 55 to 85, for example. It is preferred that number N4 of the inner middle sipes 23A is larger than the number N3 of the outer middle sipes 23B. Specifically, the number N4 of the inner middle sipes 23A is in the range of from 1.10 to 1.30 times the number N3 of the outer middle sipes 23B. Such an arrangement of the middle sipes 23 can increase the SAT while maintaining the wet performance.

The outer middle land region 18 includes outer middle block pieces 39 each defined between a pair of the outer middle sipes 23B adjacent to each other in the tire circumferential direction. The inner middle land region 19 includes inner middle block pieces 40 each defined between a pair of the inner middle sipes 23A adjacent to each other in the tire circumferential direction.

It is preferred that a length (Mbi) in the tire circumferential direction of each of the inner middle block pieces 40 is smaller than a length (Mbo) in the tire circumferential direction of each of the outer middle block pieces 39. Specifically, it is preferred that a ratio Mbi/Mbo of one of the inner middle block pieces 40 and one of the outer middle block pieces 39 is set to be in the range of from 0.85 to 0.95. The rigidity balance between the inner middle land region 19 and the outer middle land region 18 is further improved.

From the similar point of view, it is preferred that the inner middle land region 19 has the land ratio smaller than the outer middle land region 18, for example.

As shown in Fig. 1, it is preferred that, in the standard state, a camber amount C1 in the tire radial direction between the radially outermost position of a tread profile and one of the tread edges closer thereto is in the range of from 6% to 8% of the tread width TW. The tire configured as such can exert further larger SAT by the tread pattern described above.

[Other Embodiments]

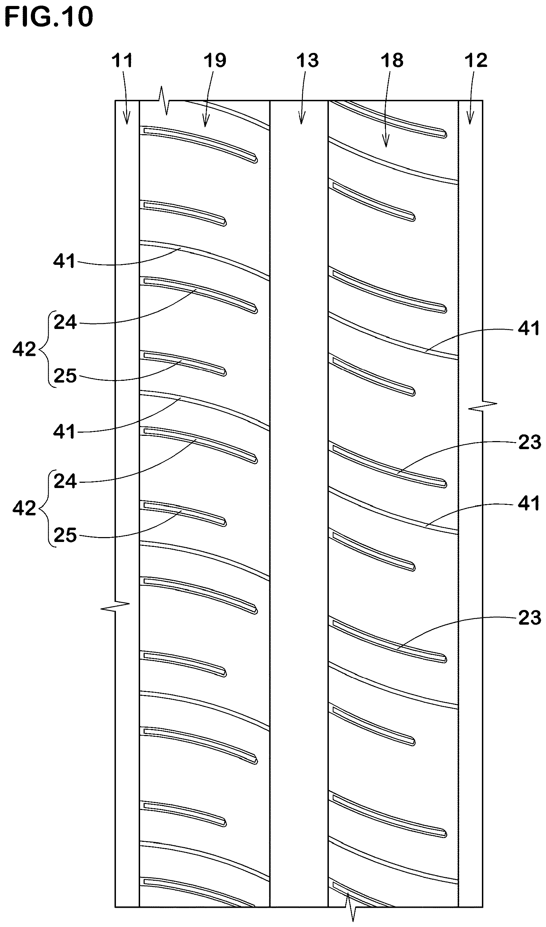

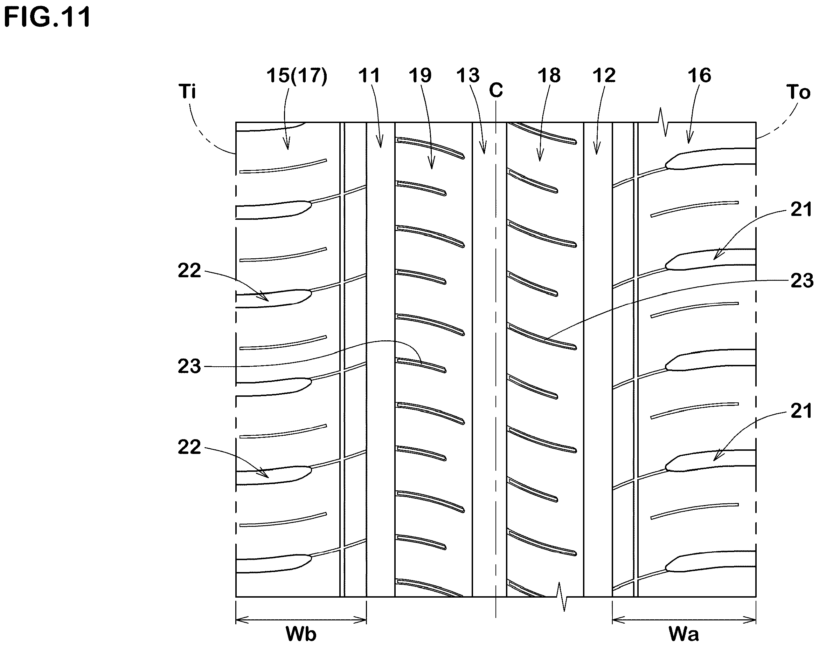

Fig. 10 is an enlarged view of the inner middle land region 19 and the outer middle land region 18 of the tire 1 according to another embodiment of the present invention. Figs. 11 to 13 are enlarged views of the tread portion 2 of the tires 1 according to yet other embodiments of the present invention. In Figs. 10 to 13, the same reference numerals are given to elements common to the above-described embodiment, and the explanation thereof is omitted here.

In the embodiment shown in Fig. 10, penetrating sipes 41 each of which completely crosses the middle land region 18 or 19 are provided. Each of the penetrating sipes 41 is provided between one of a plurality of sipe pairs 42 composed of one of the first middle sipes 24 and its adjacent one of the second middle sipes 25, for example. The penetrating sipes 41 extend along the middle sipes 23, for example. Further, each of the penetrating sipes 41 does not include an opening having an enlarged width, for example, and it is preferred that each of the penetrating sipes 41 has the width not more than 0.8 mm in its entirety. The penetrating sipes 41 configured as such can provide large frictional force by the edges thereof during running on a wet road surface.

In the embodiment shown in Fig. 11, a width (wa) in the tire axial direction of the outer shoulder land region 16 is larger than a width (wb) in the tire axial direction of the inner shoulder land region 17. In a more preferred embodiment, the width (wa) of the outer shoulder land region 16 is less than 1.20 times the width (wb) of the inner shoulder land region 17. The outer shoulder land region 16 configured as such can further increase the SAT, therefore, it is possible that excellent cornering performance is exerted.

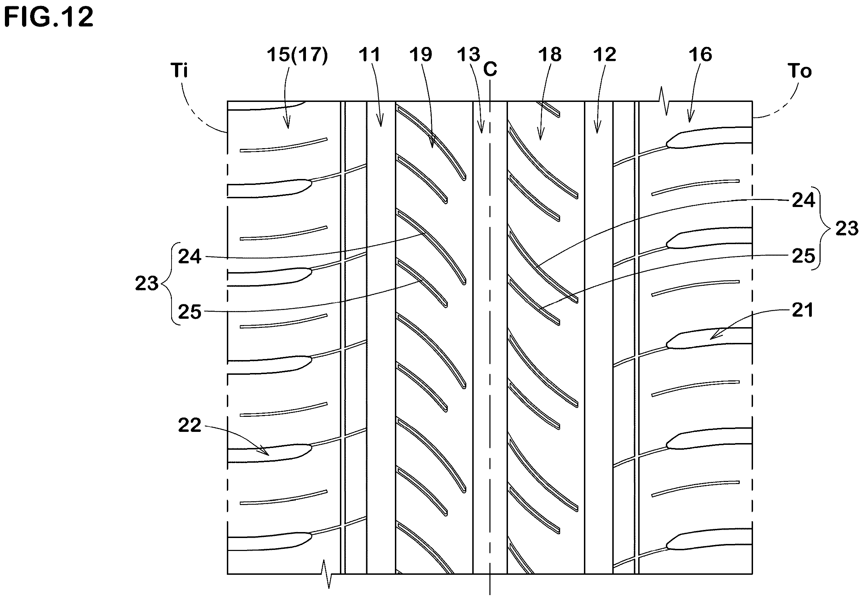

In the embodiment shown in Fig. 12, the outer middle land region 18 and the inner middle land region 19 are provided with the first middle sipes 24 and the second middle sipes 25 which are curved convexly in the same direction. Further, a radius of curvature of each of the first middle sipes 24 is smaller than a radius of curvature of each of the second middle sipes 25. Such an arrangement of the middle sipes increases the frictional force in many directions, therefore, it is possible that excellent wet performance is obtained.

It is preferred that an angle of each of the middle sipes 23 in this embodiment is in the range of from 35 to 55 degrees with respect to the tire axial direction.

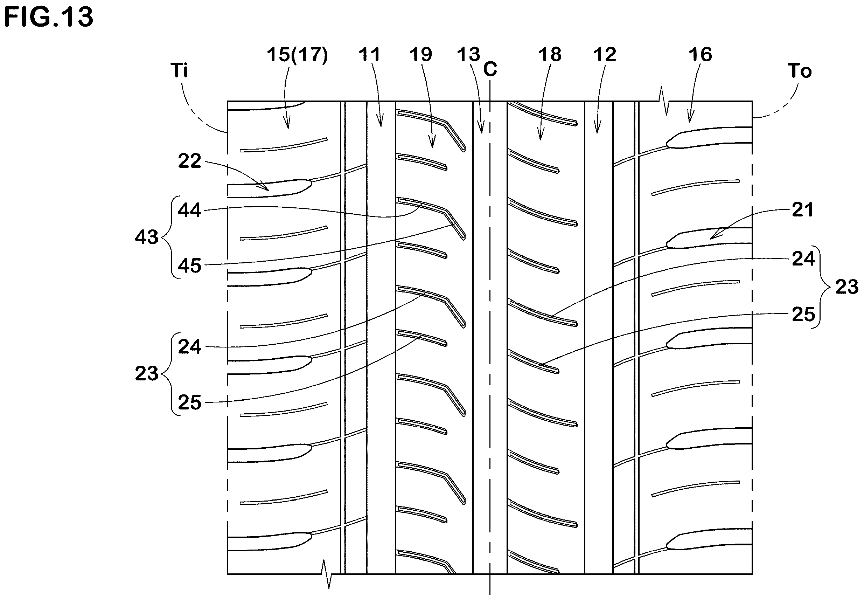

In the embodiment shown in Fig. 13, the middle sipes 23 include bent sipes 43 each has at least one bent portion. In this embodiment, the first middle sipes 24 provided in the inner middle land region 19 are configured as the bent sipes 43. The bent sipes 43 configured as such increase the rigidity of the land region when sipe walls thereof facing each other come into contact while providing the frictional force in many directions, therefore, it is possible that excellent steering stability is consequently exerted.

Each of the bent sipes 43 in this embodiment has a first portion 44 extending along the second middle sipes 25 and a second portion 45 connected with the first portion 44 on a side of the crown main groove 13 and extending at a larger angle than the first portion 44 with respect to the tire axial direction, for example. The bent sipes 43 configured as such are helpful for improving the cornering performance on a wet road surface.

while detailed description has been made of the pneumatic radial tire as an embodiment of the present invention, the present invention can be embodied in various forms without being limited to the illustrated embodiment.

### Working Example (Example)

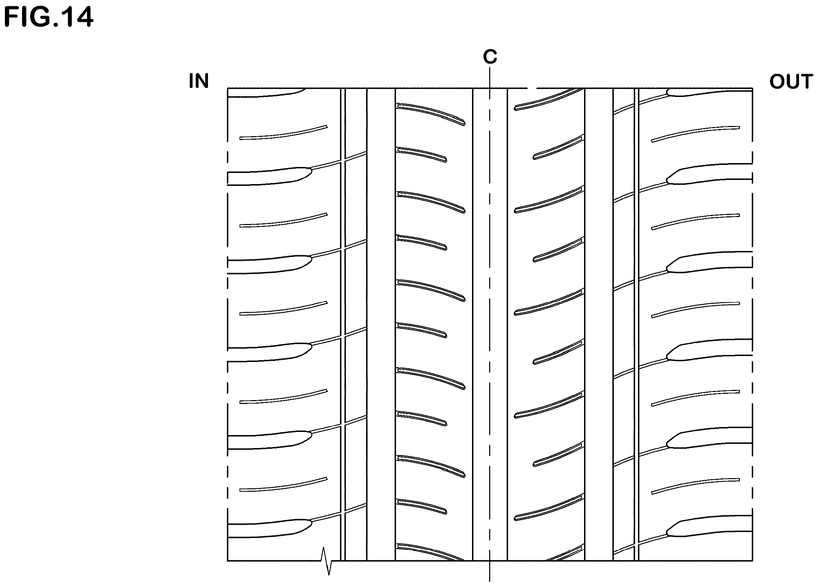

Tires of size 185/65R15 having the basic pattern shown in Fig. 2 were made by way of test according to the specifications listed in Table 1. As Reference, as shown in Fig. 14, tires in which the same number of the outer shoulder lateral grooves and the inner shoulder lateral grooves are provided and each of the middle land regions is provided with the lateral grooves each extending from respective one of the shoulder grooves toward the tire equator and terminating within the respective one of the middle land regions. Various tests were conducted for each of the test tires.

< Cornering Performance and Steering Stability >

The test tires were mounted on four wheels of an FF passenger car with a displacement of 2000 cc under the following conditions, and then a driver cornered the test car on a dry road surface with the driver being the only member in the test car, and the cornering performance and the steering stability during the test drive was evaluated by the driver's feeling. The results are indicated by an evaluation point based on the Reference being 100, wherein the larger the numerical value, the better the cornering performance or the steering stability is.

Tire rim: 15x6.0J
Tire inner pressure: 220 kPa at front wheels, 210 kPa at rear wheels

< Wet Performance >

while driving the above test car on an asphalt road surface having a radius of 100 m with a paddle having a depth of 5 mm and a length of 20 m, lateral acceleration (lateral G) of the front wheels was measured. The results are shown as average lateral G at a speed in the range of from 50 to 80 km/h and indicated as an index based on the Reference being 100, wherein the larger the numerical value, the better the wet performance is.

The test results are shown in Table 1.

Table 1.

| | Ref. | EX. 1 | EX.2 | Ex. 3 | Ex. 4 | Ex. 5 | Ex. 6 | EX.7 | EX. 8 | EX. 9 |
|---|---|---|---|---|---|---|---|---|---|---|
| Figure showing tread pattern | Fig.14 | Fig.2 | Fig.2 | Fig.2 | Fig.2 | Fig.2 | Fig.2 | Fig.2 | Fig.2 | Fig. 2 |
| Number N1 of outer shoulder lateral grooves | 66 | 66 | 66 | 66 | 66 | 66 | 55 | 60 | 70 | 85 |
| Number N2 of Inner shoulder lateral grooves | 66 | 76 | 72 | 74 | 83 | 86 | 63 | 69 | 81 | 98 |
| Ratio N2/N1 | 1.00 | 1.15 | 1.09 | 1.12 | 1.26 | 1.30 | 1.15 | 1.15 | 1.15 | 1.15 |
| Cornering pertormance [evaluation point] | 100 | 106 | 104 | 106 | 105 | 105 | 105 | 106 | 106 | 105 |
| Steering stability [evaluation point] | 100 | 102 | 103 | 102 | 101 | 100 | 102 | 102 | 101 | 100 |
| wet performance [index] | 100 | 103 | 101 | 103 | 103 | 103 | 98 | 101 | 103 | 104 |

From the test results, it was confirmed that the tires as Examples exerted excellent cornering performance while maintaining the wet performance. Further, it was confirmed that the tires as the Examples also had excellent steering stability.

Tires of size 185/65R15 having the basic pattern shown in Fig. 13 were made by way of test according to the specifications listed in Table 1. As the Reference, as shown in Fig. 14, tires in which the same number of the outer shoulder lateral grooves and the inner shoulder lateral grooves are provided and each of the middle land regions is provided with the lateral grooves each extending from respective one of the shoulder grooves toward the tire equator and terminating within the respective one of the middle land regions. For each of the test tires, the above-described cornering performance, the steering stability, and the wet performance were tested.

The test results are shown in Table 2.

Table 2.

| | Ref. | Ex.10 | Ex.11 | Ex.12 | Ex.13 | Ex.14 | Ex.15 |
|---|---|---|---|---|---|---|---|
| Figure showing tread pattern | Fig.14 | Fig.11 | Fig.11 | Fig.11 | Fig.11 | Fig.12 | Fig.13 |
| Number N1 of Outer shoulder lateral grooves | 66 | 66 | 66 | 66 | 66 | 66 | 66 |
| Number N2 of Inner shoulder lateral grooves | 66 | 76 | 76 | 76 | 76 | 76 | 76 |
| Ratio N2/N1 | 1.00 | 1.15 | 1.15 | 1.15 | 1.15 | 1.15 | 1.15 |
| width (wa) of Outer shoulder land region/ width (wb) of Inner shoulder land region | 1.00 | 1.10 | 1.05 | 1.15 | 1.20 | 1.00 | 1.00 |
| Cornering performance [evaluation point] | 100 | 107 | 106 | 107 | 107 | 104 | 105 |
| Steering stability [evaluation point] | 100 | 103 | 103 | 104 | 104 | 102 | 103 |
| Wet performance [index] | 100 | 102 | 103 | 101 | 100 | 105 | 105 |

From the test results, it was confirmed that the tires as shown in Figs. 11 to 13 as well exerted excellent cornering performance while maintaining the wet performance. Further, it was confirmed that these tires also had excellent steering stability.

## Claims

1. A pneumatic radial tire (1) for a passenger car including a carcass (6) having a radial structure, a belt layer (7) arranged on an outer side of the carcass (6) and formed of at least two belt plies (7A, 7B), and a tread portion (2) having a tread pattern whose position when mounted on a vehicle is specified, wherein
the tread portion (2) has an outer tread edge (To) and an inner tread edge (Ti) which are respectively positioned, when mounted on a vehicle, on an outer side and an inner side of the vehicle,

the tread portion (2) is divided into four circumferential land regions (15) by a plurality of main grooves (10, 11, 12, 13) extending continuously in a tire circumferential direction,

the circumferential land regions (15) include an outer shoulder land region (16) including the outer tread edge (To), an inner shoulder land region (17) including the inner tread edge (Ti), an outer middle land region (18) adjacent to the outer shoulder land region (16), and an inner middle land region (19) adjacent to the inner shoulder land region (17),

the outer shoulder land region (16) is provided with a plurality of outer shoulder lateral grooves (21) each extending inwardly in a tire axial direction from the outer tread edge (To) and terminating within the outer shoulder land region (16),

the inner shoulder land region (17) is provided with a plurality of inner shoulder lateral grooves (22) each extending axially inwardly from the inner tread edge (Ti) and terminating within the inner shoulder land region (17),

a number of the inner shoulder lateral grooves (22) is larger than a number of the outer shoulder lateral grooves (21), and

each of the outer middle land region (18) and the inner middle land region (19) is provided with a plurality of middle sipes (23) each extending from an edge on a side of the inner tread edge (Ti) of the respective land region (18, 19) toward the outer tread edge (To) and terminating within the respective land region (18, 19),

**characterized in that**

the middle sipes (23) include first middle sipes (24) and second middle sipes (25) each having a smaller length in the tire axial direction than that of each of the first middle sipes (24).

2. The pneumatic radial tire (1) according to claim 1, wherein
the number of the inner shoulder lateral grooves (22) is in a range of from 1.10 to 1.30 times the number of the outer shoulder lateral grooves (21).

3. The pneumatic radial tire (1) according to claim 1 or 2, wherein
the number of the outer shoulder lateral grooves (21) is in a range of from 55 to 85.

4. The pneumatic radial tire (1) according to any one of claims 1 to 3, wherein each of the second middle sipes (25) has a length in the tire axial direction in a range of from 0.65 to 0.85 times that of each of the first middle sipes (24).

5. The pneumatic radial tire (1) according to any one of claims 1 to 4, wherein each of the inner middle land region (19) and the outer middle land region (18) is provided with the first middle sipes (24) and the second middle sipes (25) arranged alternately in the tire circumferential direction.

6. The pneumatic radial tire (1) according to any one of claims 1 to 5, wherein a number of the middle sipes (23) provided in the inner middle land region (19) is larger than a number of the middle sipes (23) provided in the outer middle land region (18).

7. The pneumatic radial tire (1) according to claim 6, wherein
the number of the middle sipes (23) provided in the inner middle land region (19) is in a range of from 1.10 to 1.30 times the number of the middle sipes (23) provided in the outer middle land region (18).

8. The pneumatic radial tire (1) according to any one of claims 1 to 7, wherein the outer shoulder land region (16) is provided with an outer shoulder narrow groove (33) extending continuously in the tire circumferential direction between the outer shoulder main groove (12) and the plurality of the outer shoulder lateral grooves (21).

9. The pneumatic radial tire (1) according to any one of claims 1 to 8, wherein the inner shoulder land region (17) is provided with an inner shoulder narrow groove (27) extending continuously in the tire circumferential direction between the inner shoulder main groove (11) and the plurality of the inner shoulder lateral grooves (22).

10. The pneumatic radial tire (1) according to any one of claims 1 to 9, wherein a width (Wa) in the tire axial direction of the outer shoulder land region (16) is larger than a width (Wb) in the tire axial direction of the inner shoulder land region (17).

11. The pneumatic radial tire (1) according to any one of claims 1 to 10,
wherein
the width (Wa) of the outer shoulder land region (16) is less than 1.20 times the width (Wb) of the inner shoulder land region (17).

**12.** The pneumatic radial tire (1) according to any one of claims 1 to 11, wherein

the first middle sipes (24) and the second middle sipes (25) are curved convexly in the same direction, and a radius of curvature of each of the first middle sipes (24) is smaller than a radius of curvature of each of the second middle sipes (25).

**13.** The pneumatic radial tire (1) according to any one of claims 1 to 12, wherein the middle sipes (23) include bent sipes (43) each has at least one bent portion.


**Patentansprüche**

**1.** Radialluftreifen (1) für einen Personenkraftwagen mit einer Karkasse (6), die eine Radialstruktur aufweist, einer Gürtellage (7), die auf einer Außenseite der Karkasse (6) angeordnet ist und aus zumindest zwei Gürtelschichten (7A, 7B) gebildet ist, und einem Laufflächenabschnitt (2), der ein Laufflächenmuster aufweist, dessen Position bei einer Montage an einem Fahrzeug spezifiziert ist, wobei
der Laufflächenabschnitt (2) einen äußeren Laufflächenrand (To) und einen inneren Laufflächenrand (Ti) aufweist, die jeweils bei einer Montage an einem Fahrzeug auf einer Außenseite und einer Innenseite des Fahrzeugs positioniert sind,
der Laufflächenabschnitt (2) durch mehrere Hauptrillen (10, 11, 12, 13), die sich kontinuierlich in einer Umfangsrichtung des Reifens erstrecken, in vier umlaufende Landbereiche (15) geteilt ist,
die umlaufenden Landbereiche (15) einen äußeren Schulterlandbereich (16), der den äußeren Laufflächenrand (To) aufweist, einen inneren Schulterlandbereich (17), der den inneren Laufflächenrand (Ti) aufweist, einen äußeren Mittellandbereich (18), der an den äußeren Schulterlandbereich (16) angrenzt, und einen inneren Mittellandbereich (19), der an den inneren Schulterlandbereich (17) angrenzt, umfassen,
der äußere Schulterlandbereich (16) mit mehreren äußeren Schulterquerrillen (21) versehen ist, die sich jeweils von dem äußeren Laufflächenrand (To) in einer axialen Richtung des Reifens nach innen erstrecken und innerhalb des äußeren Schulterlandbereichs (16) enden,
der innere Schulterlandbereich (17) mit mehreren inneren Schulterquerrillen (22) versehen ist, die sich jeweils von dem inneren Laufflächenrand (Ti) axial nach innen erstrecken und innerhalb des inneren Schulterlandbereichs (17) enden,
eine Anzahl der inneren Schulterquerrillen (22) größer als eine Anzahl der äußeren Schulterquerrillen (21) ist, und jeder von dem äußeren Mittellandbereich (18) und dem inneren Mittellandbereich (19) mit mehreren Mittelfeinschnitten (23) versehen ist, die sich jeweils von einem Rand auf einer Seite des inneren Laufflächenrandes (Ti) des jeweiligen Landbereichs (18, 19) in Richtung des äußeren Laufflächenrandes (To) erstrecken und innerhalb des jeweiligen Landbereichs (18, 19) enden,
**dadurch gekennzeichnet, dass**
die Mittelfeinschnitte (23) erste Mittelfeinschnitte (24) und zweite Mittelfeinschnitte (25) umfassen, die jeweils eine kleinere Länge in der axialen Richtung des Reifens als diejenige eines jeweiligen der ersten Mittelfeinschnitte (24) aufweisen.

**2.** Radialluftreifen (1) nach Anspruch 1, wobei
die Anzahl der inneren Schulterquerrillen (22) in einem Bereich des 1,10-fachen bis 1,30-fachen der Anzahl der äußeren Schulterquerrillen (21) liegt.

**3.** Radialluftreifen (1) nach Anspruch 1 oder 2, wobei
die Anzahl der äußeren Schulterquerrillen (21) in einem Bereich von 55 bis 85 liegt.

**4.** Radialluftreifen (1) nach einem der Ansprüche 1 bis 3, wobei
jeder der zweiten Mittelfeinschnitte (25) eine Länge in der axialen Richtung des Reifens in einem Bereich des 0,65-fachen bis 0,85-fachen von derjenigen jedes der ersten Mittelfeinschnitte (24) aufweist.

**5.** Radialluftreifen (1) nach einem der Ansprüche 1 bis 4, wobei
jeder von dem inneren Mittellandbereich (19) und dem äußeren Mittellandbereich (18) mit den ersten Mittelfeinschnitten (24) und den zweiten Mittelfeinschnitten (25) versehen ist, die in der Umfangsrichtung des Reifens abwechselnd angeordnet sind.

**6.** Radialluftreifen (1) nach einem der Ansprüche 1 bis 5, wobei
eine Anzahl der Mittelfeinschnitte (23), die in dem inneren Mittellandbereich (19) vorgesehen sind, größer als eine Anzahl der Mittelfeinschnitte (23) ist, die in dem äußeren Mittellandbereich (18) vorgesehen sind.

**7.** Radialluftreifen (1) nach Anspruch 6, wobei
die Anzahl der Mittelfeinschnitte (23), die in dem inneren Mittellandbereich (19) vorgesehen sind, in einem Bereich des 1,10-fachen bis 1,30-fachen der Anzahl der Mittelfeinschnitte (23) liegt, die in dem äußeren Mittellandbereich (18) vorgesehen sind.

**8.** Radialluftreifen (1) nach einem der Ansprüche 1 bis 7, wobei
der äußere Schulterlandbereich (16) mit einer schmalen äußeren Schulterrille (33) versehen ist, die sich in der Umfangsrichtung des Reifens kontinuierlich zwischen der äußeren Schulterhauptrille (12) und den mehreren äußeren Schulterquerrillen (21) erstreckt.

**9.** Radialluftreifen (1) nach einem der Ansprüche 1 bis 8, wobei
der innere Schulterlandbereich (17) mit einer schmalen inneren Schulterrille (27) versehen ist, die sich in der Umfangsrichtung des Reifens kontinuierlich zwischen der inneren Schulterhauptrille (11) und den mehreren inneren Schulterquerrillen (22) erstreckt.

**10.** Radialluftreifen (1) nach einem der Ansprüche 1 bis 9, wobei
eine Breite (Wa) des äußeren Schulterlandbereichs (16) in der axialen Richtung des Reifens größer als eine Breite (Wb) des inneren Schulterlandbereichs (17) in der axialen Richtung des Reifens ist.

**11.** Radialluftreifen (1) nach einem der Ansprüche 1 bis 10, wobei
die Breite (Wa) des äußeren Schulterlandbereichs (16) kleiner als das 1,20-fache der Breite (Wb) des inneren Schulterlandbereichs (17) ist.

**12.** Radialluftreifen (1) nach einem der Ansprüche 1 bis 11, wobei

die ersten Mittelfeinschnitte (24) und die zweiten Mittelfeinschnitte (25) in der gleichen Richtung konvex gekrümmt sind und
ein Krümmungsradius jedes der ersten Mittelfeinschnitte (24) kleiner als ein Krümmungsradius jedes der zweiten Mittelfeinschnitte (25) ist.

**13.** Radialluftreifen (1) nach einem der Ansprüche 1 bis 12, wobei
die Mittelfeinschnitte (23) gebogene Feinschnitte (43) umfassen, die jeweils zumindest einen gebogenen Abschnitt aufweisen.


**Revendications**

**1.** Bandage pneumatique radial (1) pour une voiture particulière incluant une carcasse (6) ayant une structure radiale, une couche de ceinture (7) agencée sur un côté extérieur de la carcasse (6) et formée d'au moins deux nappes de ceinture (7A, 7B), et une portion formant bande de roulement (2) ayant un motif de roulement dont la position est spécifiée quand le pneumatique est monté sur un véhicule, dans lequel
la portion formant bande de roulement (2) a un bord de roulement extérieur (To) et un bord de roulement intérieur (Ti) qui sont respectivement positionnés, quand le pneumatique est monté sur un véhicule, sur un côté extérieur et un côté intérieur du véhicule,
la portion formant bande de roulement (2) est divisée en quatre régions en relief circonférentielles (15) par une pluralité de rainures principales (10, 11, 12, 13) s'étendant en continu dans la direction circonférentielle du pneumatique,
les régions en relief circonférentielles (15) incluent une région en relief d'épaulement extérieure (16) incluant le bord de roulement extérieur (To), une région en relief d'épaulement intérieure (17) incluant le bord de roulement intérieur (Ti), une région relief médiane extérieure (18) adjacente à la région en relief d'épaulement extérieure (16), et une région en relief médiane intérieure (19) adjacente à la région en relief d'épaulement intérieure (17),
la région en relief d'épaulement extérieure (16) est dotée d'une pluralité de rainures latérales d'épaulement extérieures (21) s'étendant chacune vers l'intérieur dans une direction axiale du pneumatique depuis le bord de roulement extérieur (To) et se terminant à l'intérieur de la région en relief d'épaulement extérieure (16),

la région en relief d'épaulement intérieure (17) est dotée d'une pluralité de rainures latérales d'épaulement intérieures (22) s'étendant chacune axialement vers l'intérieur depuis le bord de roulement intérieur (Ti) et se terminant à l'intérieur de la région en relief d'épaulement intérieure (17),

un nombre de rainures latérales d'épaulement intérieures (22) est plus grand qu'un nombre de rainures latérales d'épaulement extérieures (21), et

chaque région parmi la région en relief médiane extérieure (18) et la région en relief médiane intérieure (19) est dotée d'une pluralité de fentes médianes (23) s'étendant chacune depuis un bord sur un côté du bord de roulement intérieur (Ti) de la région en relief respective (18, 19) vers le bord de roulement extérieur (To) et se terminant à l'intérieur de la région en relief respective (18, 19),

**caractérisé en ce que**

les fentes médianes (23) incluent des premières fentes médianes (24) et des secondes fentes médianes (25) ayant chacune une longueur plus petite dans la direction axiale du pneumatique que celle de chacune des premières fentes médianes (24).

2. Bandage pneumatique radial (1) selon la revendication 1, dans lequel
le nombre de rainures latérales d'épaulement intérieures (22) est dans une plage allant de 1,10 à 1,30 fois le nombre de rainures latérales d'épaulement extérieures (21).

3. Bandage pneumatique radial (1) selon la revendication 1 ou 2, dans lequel
le nombre de rainures latérales d'épaulement extérieures (21) est dans une plage allant de 55 à 85.

4. Bandage pneumatique radial (1) selon l'une quelconque des revendications 1 à 3, dans lequel
chacune des secondes fentes médianes (25) a une longueur dans la direction axiale du pneumatique dans une plage allant de 0,65 à 0,85 fois celle de chacune des premières fentes médianes (24).

5. Bandage pneumatique radial (1) selon l'une quelconque des revendications 1 à 4, dans lequel
chaque région parmi la région en relief médiane intérieure (19) et la région en relief médiane extérieure (18) est dotée des premières fentes médianes (24) et des secondes fentes médianes (25) agencées en alternance dans la direction circonférentielle du pneumatique.

6. Bandage pneumatique radial (1) selon l'une quelconque des revendications 1 à 5, dans lequel
un nombre de fentes médianes (23) prévues dans la région en relief médiane intérieure (19) est plus grand qu'un nombre de fentes médianes (23) prévues dans la région en relief médiane extérieure (18).

7. Bandage pneumatique radial (1) selon la revendication 6, dans lequel
le nombre de fentes médianes (23) prévues dans la région en relief médiane intérieure (19) est dans une plage allant de 1,10 à 1,30 fois le nombre de fentes médianes (23) prévues dans la région en relief médiane extérieure (18).

8. Bandage pneumatique radial (1) selon l'une quelconque des revendications 1 à 7, dans lequel
la région en relief d'épaulement extérieure (16) est dotée d'une rainure étroite d'épaulement extérieure (33) s'étendant en continu dans la direction circonférentielle du pneumatique entre la rainure principale d'épaulement extérieure (12) et la pluralité de rainures latérales d'épaulement extérieures (21).

9. Bandage pneumatique radial (1) selon l'une quelconque des revendications 1 à 8, dans lequel
la région en relief d'épaulement intérieure (17) est dotée d'une rainure étroite d'épaulement intérieure (27) s'étendant en continu dans la direction circonférentielle du pneumatique entre la rainure principale d'épaulement intérieure (11) et la pluralité de rainures latérales d'épaulement intérieures (22).

10. Bandage pneumatique radial (1) selon l'une quelconque des revendications 1 à 9, dans lequel
une largeur (Wa) dans la direction axiale du pneumatique de la région en relief d'épaulement extérieure (16) est plus grande qu'une largeur (Wb) dans la direction axiale du pneumatique de la région en relief d'épaulement intérieure (17).

11. Bandage pneumatique radial (1) selon l'une quelconque des revendications 1 à 10, dans lequel
la largeur (Wa) de la région en relief d'épaulement extérieure (16) est inférieure à 1,20 fois la largeur (Wb) de la région en relief d'épaulement intérieure (17).

12. Bandage pneumatique radial (1) selon l'une quelconque des revendications 1 à 11, dans lequel

les premières fentes médianes (24) et les secondes fentes médianes (25) sont courbées de manière convexe dans la même direction, et
un rayon de courbure de chacune des premières fentes médianes (24) est plus petit qu'un rayon de courbure de chacune des secondes fentes médianes (25).

13. Bandage pneumatique radial (1) selon l'une quelconque des revendications 1 à 12, dans lequel
les fentes médianes (23) incluent des fentes cintrées (43) ayant chacune au moins une portion cintrée.

FIG.1

EP 3 450 210 B1

**FIG.2**

EP 3 450 210 B1

# FIG.3

Inner wheels during cornering      Outer wheels during cornering

OUT      IN      IN      OUT

18  16

Pc

X2

Pc

17  19

X1

EP 3 450 210 B1

## FIG.4A

## FIG.4B

## FIG.5

# FIG.6A

# FIG.6B

# FIG.7

# FIG.8

**FIG.9A**

**FIG.9B**

**FIG.9C**

# FIG.10

**FIG.11**

FIG.12

**FIG.13**

EP 3 450 210 B1

FIG.14

FIG.15

EP 3 450 210 B1

# FIG.16

Rear wheel tire

Inner wheels during cornering

Outer wheels during cornering

Front wheel tire

Inner wheels during cornering

Outer wheels during cornering

On-Bench CP

Ff

Fr

Load

Rear load

Front load

EP 3 450 210 B1

# FIG.17

**EP 3 450 210 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3176009 A1
- JP 2015157600 A
- EP 3254872 A1